# EUROPEAN PATENT APPLICATION

(11) **EP 1 890 286 A1**
(43) Date of publication of application: **20.02.2008**
(21) Application number: 06119162.3
(22) Date of filing: 18.08.2006
(51) Int. Cl.: G11B 7/09

(54) **Actuator for an optical disc drive**

(71) Applicant: DEUTSCHE THOMSON-BRANDT GMBH, 78048 Villingen-Schwenningen (DE)
(72) Inventor: Tabor, Günter, 78056 Villingen-Schwenningen (DE); Bammert, Michael, 78739 Hardt (DE); Dupper, Rolf, 78050 Villingen-Schwenningen (DE); Suzuki, Tsuneo, 78087 Mönchweiler (DE)
(74) Representative: Thies, Stephan

(57) **Abstract**

An actuator (1) for an optical disc drive comprises a support member (10) comprising fixtures (16) for a plurality of suspension wires (15), a magnet (14) mounted on the support member (10), and a lens holder (4) movably held near the magnet (14) by the suspension wires (15), the lens holder (4) comprising a frame member (17) in which an objective lens (5) is mounted and a circuit board (25) mounted at a side (18, 19) of the frame member (17) facing the magnet (14), the circuit board (25) bearing a plurality of coils (26) which are electrically connected to the suspension wires (15). For reducing the mass of the lens holder, planar conductors (30) interconnecting the circuit board (25) and the suspension wires (15) are formed directly on a surface (20, 21) of the frame member (17).

## Description

The present invention relates to an actuator for use in an optical disc drive, for positioning at least part of an optical recording/reproducing system with respect to the surface of a disc on which data are to be recorded or read.

Conventionally, the recording/reproducing system of such a disc drive comprises a light source in the form of a laser diode and a light detector in the form of a photodetector mounted to a movable unit so as to be displaceable in the radial direction of a disc, in order to access data recorded in concentric or spiral tracks on that disc. Frequently, the centre of these tracks does not coincide exactly with the centre of rotation of the disc, so that the recording/reproducing system may not be able to follow a track if its eccentricity is too large. Further, the disk may deviate from a perfectly flat shape orthogonal to the axis of rotation, which may cause the surface normal of the disc to be slightly tilted with respect to the axis of rotation, and the distance between the recording/reproducing system and the disc to oscillate when the disc rotates, so that the recording/reproducing system would be out of focus at least part of the time.

In order to maintain focus and tracking under these circumstances, it is known to provide the movable unit with an actuator which supports at least part of the recording/reproducing system and which can be controlled to quickly displace this part so as to compensate the eccentricity and tilt of the disc. A prior art actuator comprises a support member for mounting the actuator to the movable unit of the disc drive, which comprises fixtures for a plurality of suspension wires and supports a first magnet. Near the first magnet a lens holder is movably held by the suspension wires. The lens holder comprises a frame member in which an objective lens is mounted, and a first circuit board mounted at a first side of the frame member facing the first magnet, the first circuit board bearing a plurality of coils which are electrically connected to the suspension wires by means of conductors formed on connection members attached to sides other than the first of the frame member. By selectively supplying electric currents to the various coils, the lens holder can be caused to move and/or to tilt. By appropriate and precise control of the movement of the lens holder, the lens and the focus spot it produces can be brought to follow a given track on the disc and to remain focused relative to a laser diode and/or a photodetector of the reading/recording system.

Compensation of disc irregularities such as eccentricity and tilt is a key task when developing high speed disc drives. High data reading or recording rates typically involve a high rotation speed of the disk. The higher the rotation speed is, the faster must be the compensating movements of the lens holder. Such a high speed can be achieved by applying high driving forces and/or by reducing the mass of the lens holder. High driving forces would require large magnets increasing the overall weight of the disk drive and/or large coils increasing the mass and hence the inertia of the lens holder, which is not desirable. The present invention therefore aims at reducing the mass of the lens holder. Also, discrete connection members can be seen to have the drawback to be prone to mechanical vibrations. Because of the orientation of the discrete connection members substantially in line with the suspension wires, this tendency for vibrations is particularly strong for tracking movements, i.e. for movements in a direction substantially orthogonal or transversal to the elongation of the connection members. The present invention therefore also aims to avoid or reduce mechanical vibrations.

These goals and others are reached by omitting the connection members and instead forming planar conductors that interconnect the circuit board and the suspension wires directly on the surface of the frame member. The part count of the disk drive is reduced, the mass of the lens holder is reduced, and a source of mechanical vibrations is avoided altogether.

The suspension wires serve to selectively supply distinct electric currents to the various coils, whereby a magnetic field is generated which interacts with the field of the permanent magnet mounted on the support member and causes the lens holder to move with respect to the support member. Under electrical aspects it would be possible to fix and connect the suspension wires directly to the first circuit board on which the coils are formed. However, such a design would be mechanically imbalanced, the lens holder would have a tendency to be tilted under its own weight, and even to dynamically tilt under any of its movements. Therefore the suspension wires are preferably fixed to the frame member at a center, well-balanced location away from the first circuit board.

The same principle applies for actuators which comprise two magnets in a spaced-apart relationship, where the lens holder is held in a gap between the magnets, and where the lens holder comprises two circuit boards mounted at opposite first and second sides facing the magnets. Here the suspension wires are preferably fixed at a location approximately mid-way between the two circuit boards, close to the center of gravity of the lens holder. According to the invention, then, for at least some of the connections between the first and second circuit boards and the suspension wires, distinct connection members are omitted and planar conductors directly on the surface of the frame member are employed instead.

Preferably, the suspension wires are fixed to stubs which protrude from the sides. An intermediate region of the suspension wires may be fixed to the stubs, thus defining first and second portions of the suspension wires extending to either side of the stubs. The first portion of the suspension wires, namely the portions extending towards the fixture of the support member will then support the weight of the lens holder and may be subject to mechanical stress, whereas the second portions, which are electrically connected to the lens holder, are relieved from stress. Under manufacturing aspects, it is convenient to solder the second wire portions to selected ones of the planar conductors formed on the frame member.

The frame member is preferably injection moulded in one piece. Preferably, the frame member is made of a liquid crystal polymer. These polymers have a high mechanical strength, so that mass may be reduced by reducing the thickness of the walls of the frame member; they can be plated, so that the planar conductors can be formed easily; and they have a low thermal expansion coefficient, thus reducing the sensitivity of the actuator to temperature variations.

A very compact design for miniaturised applications can be achieved if a light source and/or a light detector is mounted to the frame member. In that case, the light source and/or the light detector preferably is electrically connected to at least one of the suspension wires so as to transmit read/write data on that at least one suspension wire. In other cases, a light source and/or a light detector will be mounted to the support member, in order to keep the mass of the lens holder as low as possible.

Further features and advantages of the invention will become apparent from the subsequent description of embodiments thereof referring to the appended drawings.
- Fig. 1: is a schematic view of the movable unit of a disc drive unit equipped with a light source, a light detector and an actuator according to the invention;
- Fig. 2: is a perspective view of the actuator;
- Fig. 3: is a perspective view of the lens holder;
- Fig. 4: is an exploded view of the lens holder; and
- Fig. 5: is a cross section view of a detail of the lens holder.

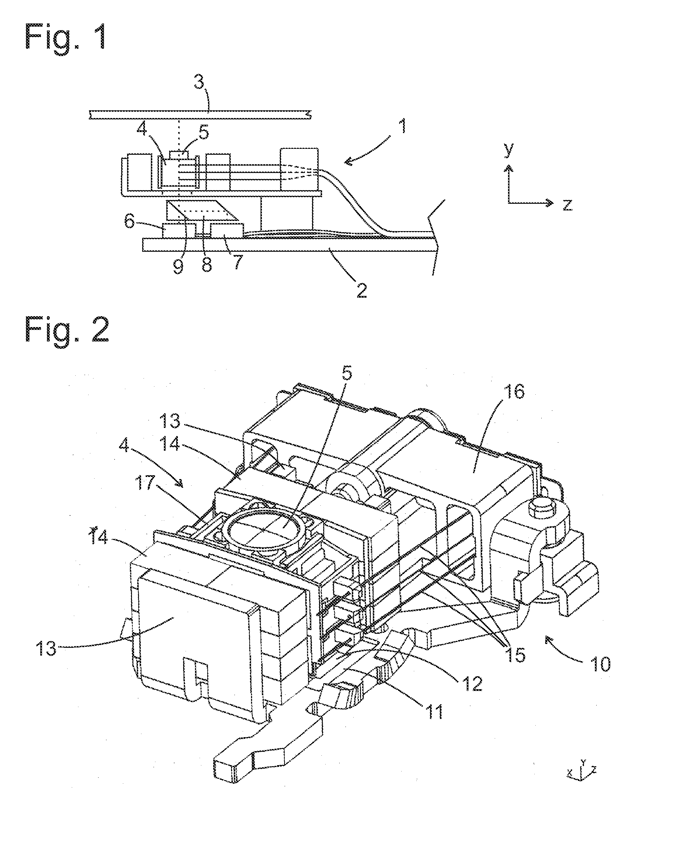

Fig. 1 is a schematic overview of an actuator 1 which embodies the invention, mounted to a partially shown movable unit 2 of an optical disc drive accessing a partially shown disk 3. For the description of the movable unit 2 and the actuator 1, reference will be made to a coordinate system having axes x, y and z. In Fig. 1, axes y and z extend in the paper plane, and the x axis is perpendicular thereto. The disc 3 rotates around an axis parallel to the y axis. For the movable unit 2, two basic designs are widely used. In the first design sometimes known as swivel arm design, a basis, not shown, of the movable unit 2 is pivotably mounted at a frame of the optical disc drive. The pivoting axis is parallel to the y axis, so that the free end of unit 2 is movable across the tracks on the surface of the disk along an arc which extends in the x direction. In the other widely used design, sometimes known as slide or sled design, the movable unit is shiftably fitted to a frame structure of the disk drive; with appropriate linear driving means for realising the shift, like linear motors or a motor driven threaded rod. The actuator 1 of the invention is applicable in both basic designs.

The actuator comprises a movable lens holder 4 bearing a lens 5. Underneath the lens 5, a light source in the form of a laser diode 6 and a light detector in the form of a photodetector 7 are fixed to the free end of movable unit 2. Between these and the lens holder 4, there is a transparent slab 8 with a semi-transparent mirror 9 for aligning light beams that propagate from the laser diode 6 to the disc 3 and from the disc 3 to the photodetector 7. In order to compensate for eccentricity of the disc 3, the lens holder 4 must be displaceable in the x direction and/or tiltable around the z axis, in order to ensure that the pits of a track are properly imaged onto the photodetector 7. If the disc 3 deviates in y direction from its nominal position, the lens holder 4 must be displaced in the y direction in order to ensure that the image of the pits on the photodetector remains properly focused. A deviation in the y or focus direction may exist as a constant offset when the disc is bent in a rotationally symmetric way, or even as a dynamically changing offset in all other forms of disk bend or other position offset.

Fig. 2 is a detailed perspective view of the actuator 1. The actuator has a base 10 formed of sheet metal comprising a substantially flat central portion 11 in which a hole 12 is formed, and side walls 13 at opposite sides of the hole 12. Permanent magnets 14 are fixed to the side walls 13, defining a gap above the hole 12, in which a magnetic field oriented in the z direction is formed. The lens holder 4 is held in this gap by means of suspension wires 15 which extend from a fixture body 16 mounted on base 10.

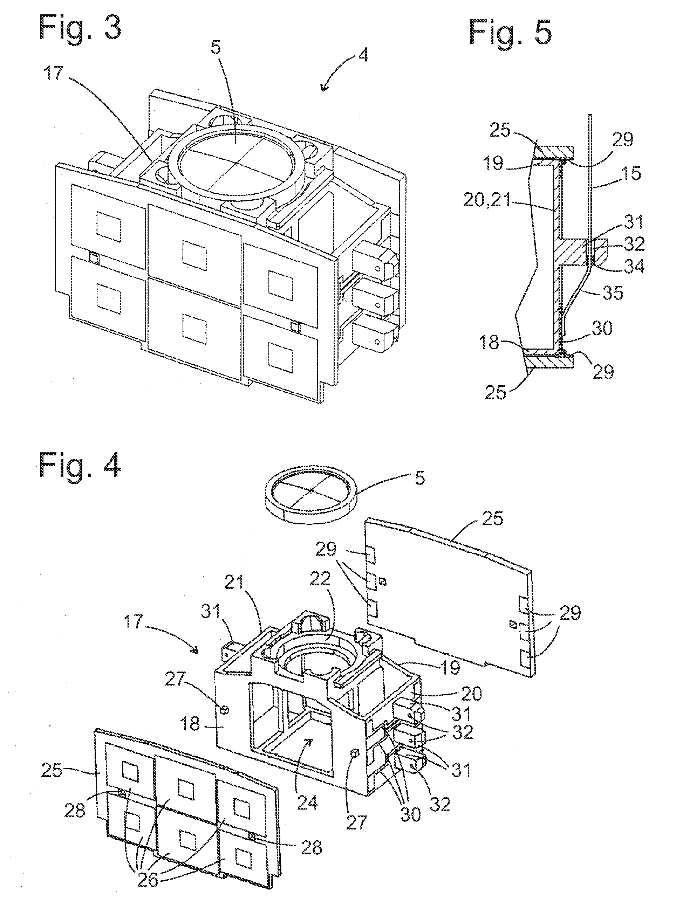

The structure of the lens holder 4 is described in more detail referring to Figs. 3 and 4, which show the lens holder 4 in perspective and in an exploded views, respectively. The lens holder 4 comprises a frame member 17 of substantially cuboid shape having side walls 18, 19 extending in the x and y directions, side walls 20, 21 extending in y and z directions, a circular mount 22 for the lens 5 at a top side, and a central cavity 24 through which light may propagate between the lens 5, on the one hand, and the laser diode or the photodetector, on the other hand, through hole 12.

The frame member 17 is injection moulded in one piece from a liquid crystal polymer. To the side walls 18, 19 of the frame member 17, circuit boards 25 are attached, each of which bears six planar microstructured coils 26. The position of the circuit boards 25 is defined by small projections 27 which are formed on the side walls 18, 19 and engage with mating holes 28 of the circuit boards. Contact pads 29 for supplying electric current to the coils 26 are formed on those sides of the circuit boards 25 which face the side walls 20, 21. The contact pads 29 are aligned with planar conductors 30 which are directly plated onto the side walls 20, 21. The planar conductors 30 are preferably formed on the side walls 18 by laser direct structuring (LDS) technology but might in principle also be formed by conventional photolithographic techniques or other methods known in the art of printed circuit boards. Since the conductors 30 are directly formed on the frame member 17 which supports the circuit boards 25, a gap between the conductors 30 and the contact pads 29 can be made extremely small, so that a reliable electric contact between the two can be formed using very small amounts of solder which can be quickly melted e. g. by laser irradiation, allowing for a quick and convenient assembly. Further, onto each side wall 20, 21, three stubs 31 are formed, each of which has a through hole 32 at its remote end. During assembly of the actuator, each of the through holes 32 receives one of the suspension wires 15.

As shown in the cross section of Fig. 5, the suspension wire is fixed in the through hole 32 by solder 34. Since it is difficult to plate the sides of the stubs 31, an electric contact to the planar conductors 30 is made by bending an end portion 35 of the wire 15 towards the side wall 20 or 21 and soldering it to one of its planar conductors 30. In this way, the suspension wires 15 do not only hold the lens holder in place between the magnets 14, but can also be used to apply electric current to the coils 26 in order to displace the lens holder 4 with respect to the magnets 14. By e. g. applying a current having a first polarity to the three upper coils of each circuit board 25 and a current having the opposite polarity to the three lower coils, displacement in the y direction can be controlled; by applying opposite currents to left hand and right hand coils, displacement in the x direction is achieved. Other combinations of currents enable e.g. a rotation of the lens holder around the z axis.

## Claims

1. An actuator (1) for an optical disc drive comprising
- a support member (10) comprising fixtures (16) for a plurality of suspension wires (15);
- a first magnet (14) mounted on the support member (10); and
- a lens holder (4) movably held near the first magnet (14) by the suspension wires (15), the lens holder (4) comprising a frame member (17) in which an objective lens (5) is mounted and a first circuit board (25) mounted at a first side (18) of the frame member (17) facing the first magnet (14), the first circuit board (25) bearing a plurality of coils (26) electrically connected to the suspension wires (15); the actuator
**characterized in that**
the first circuit board (25) is electrically connected to conductors (30) formed directly on a surface (20, 21) of the frame member (17).

2. The actuator of claim 1, additionally comprising a second magnet (14) mounted on the support member (10) in a spaced-apart relationship to the first magnet (14), wherein the lens holder (4) is movably held in a gap between the first magnet (14) and the second magnet (14) and additionally comprises a second circuit board (25) mounted at a second side (19) of the frame member (17) opposite to the first side (18) and facing the second magnet (14), the second circuit board (25) bearing a plurality of coils (26) electrically connected to the suspension wires (15); and wherein the conductors (30) connect the first circuit board (25) to at least one of the second circuit board (25) and the suspension wires (15).

3. The actuator of claim 2, wherein the frame member (17) is quadrangular in cross section, and the surface (20, 21) on which the planar conductors (30) are formed is at least one of a third and a fourth side (20, 21) extending between the first and second sides (18, 19) of the frame member (17).

4. The actuator of any one of claims 1 to 3, wherein the suspension wires (15) are fixed to the frame member (17).

5. The actuator of claim 3, wherein the suspension wires (15) are fixed to stubs (31) protruding from the third and fourth sides (20, 21).

6. The actuator of claim 5, wherein the suspension wires (15) have first and second portions extending to either side of the stubs (31), and wherein the first portion of each suspension wire (15) is held by the fixtures (16) whereas the second portion (35) is electrically connected to the lens holder (4).

7. The actuator of claim 6, wherein the second portion (35) is soldered to one of the planar conductors (30).

8. The actuator of one of the preceding claims, wherein the frame member (17) is injection moulded in one piece.

9. The actuator of one of the preceding claims, wherein the frame member (17) is made of a liquid crystal polymer.

10. The actuator of one of the preceding claims, wherein a light source (6) and/or a light detector (7) is mounted to the frame member.

11. The actuator of claim 10, wherein at least one of the light source (6) and the light detector (7) is electrically connected to at least one of the suspension wires (15).

12. The actuator of one of claims 1 to 9, wherein a light source and/or a light detector is mounted to the support member (10).
